# EUROPEAN PATENT APPLICATION

(11) **EP 1 971 169 A1**
(43) Date of publication of application: **17.09.2008**
(21) Application number: 06833164.4
(22) Date of filing: 22.11.2006
(51) Int. Cl.: H04Q 7/38

(54) **PORTABLE TERMINAL DEVICE AND METHOD FOR LIMITING USE OF SAME**

(30) Priority: 27.12.2005 JP 2005375823
(71) Applicant: Matsushita Electric Industrial Co., Ltd., Kadoma-shi Osaka 571-8501 (JP)
(72) Inventor: OHMOTO, Akihiro Matsushita Electric Industrial Co.,Ltd., 2-1-61, Shiromi,Chuo-ku Osaka 540-6207 (JP)
(74) Representative: Grünecker, Kinkeldey, Stockmair & Schwanhäusser Anwaltssozietät
(86) International application number: PCT/JP2006/323342
(87) International publication number: WO 2007/074596

(57) **Abstract**

It is an object to provide a portable terminal apparatus capable of improving a usability while maintaining a security, and a use restricting method thereof.

A portable terminal apparatus 1 carries out a radio authentication together with a radio communicating unit 3. The portable terminal apparatus 1 gives a predetermined alarm to a user, thereby improving a usability when a distance from the radio communicating unit is set to be an alarm distance D2 to be a shorter distance before the distance from the radio communicating unit is set to be an authentication enable distance D1.

## Description

### TECHNICAL FIELD

The present invention relates to a portable terminal apparatus for carrying out a radio authentication together with an external radio communicating unit and a use restricting method thereof.

### BACKGROUND ART

In order to prevent various equipment such as a portable telephone from being used without permission due to misplacing or thefts, conventionally, there has been proposed a use restricting apparatus of equipment for restricting a calling function of the portable telephone when the portable telephone is separated from an owner by a certain distance or more.

In the use restricting apparatus, an identification code is transmitted/received between an identifying signal transmitting unit carried by the owner of the portable telephone and a use restriction cancelling unit built in the portable telephone, and a cancelling unit stops a use restriction cancelling signal of the portable telephone when both of the units are separated from each other by a certain distance or more (for example, see Patent Document 1). Patent Document 1 : JP-A-11-88499 Publication

### DISCLOSURE OF THE INVENTION

### PROBLEMS THAT THE INVENITON IS TO SOLVE

In the use restricting apparatus, a communication distance between the identifying signal transmitting unit and the use restriction cancelling unit is determined from an amount of attenuation of a radio wave transmitted from the identifying signal transmitting unit. Depending on the amount of the attenuation, the use of the portable telephone is restricted. Accordingly, it can be assumed that the portable telephone cannot be used after a user takes a step even if the portable telephone could be used a little while ago, or a fault is caused over a communication path so that the portable telephone cannot be used suddenly. More specifically, it can be assumed that a sudden use interruption is generated for the user and a portable terminal apparatus cannot be used comfortably.

It is an object of the invention to provide a portable terminal apparatus which can also maintain a usability while maintaining a security, and a use restricting method thereof.

### MEANS FOR SOLVING THE PROBLEMS

The invention provides a portable terminal apparatus for carrying out a radio authentication together with an external radio communicating unit, comprising a radio authenticating portion for detecting a distance from the radio communicating unit and carrying out an authentication depending on whether the distance from the radio communicating unit is equal to or smaller than an authentication enable distance, a notice determination portion for activating a predetermined alarm function to a user if the distance detected by the radio authenticating portion is equal to or greater than an alarm distance at which a predetermined alarm is to be given to the user and is smaller than a use restriction distance which is greater than the alarm distance and at which a predetermined function is to be stopped, and a use restricting portion for restricting a preselected function if the distance detected by the radio authenticating portion is equal to or greater than the use restriction distance.

By the structure, the function is not uniformly controlled when a predetermined distance is made apart from the radio communicating unit, but a predetermined alarm is given to the user when a distance shorter than the predetermined distance is made apart from the radio communicating unit, that is, before a restriction starts. Accordingly, the user can take a proper action before a use restriction is put on the terminal depending on the environment situation or a use situation of a terminal. Consequently, it is possible to improve a usability while maintaining a security of the terminal.

For an apparatus having the alarm function, it is possible to utilize at least one of an LED, an LCD, a speaker and a receiver. By utilizing an existing apparatus, it is possible to give an alarm notice which can easily reach the user.

Moreover, the portable terminal apparatus according to the invention can further comprise an operating portion for accepting an operation input for selecting a function to be a use restricting target and a setting storing portion for storing a relationship between the operation input and the function to be the use restricting target, and the use restricting portion stops the function to be the use restricting target by referring to the setting storing portion corresponding to the operation input. By the structure, the user can change a security setting level depending on a scene, for example.

In the invention, in the case in which the portable terminal apparatus is a portable telephone, the use restricting portion stops the selected function after an end of a call carried out by the portable telephone if the distance detected by the radio authenticating portion during the call is equal to or greater than the use restriction distance. By the structure, the user can continuously carry out the call without a sudden interruption also when the distance from the radio communicating unit is greater than the authentication distance. Accordingly, it is possible to maintain a security and a usability.

In the invention, moreover, it is also possible to have such a structure that the notice determination portion transmits, to the radio communicating unit, notice data including at least one of a notice indicating that the predetermined alarm function to a user is activated and a notice indicating that the selected function of the portable terminal apparatus is restricted by the use restricting portion. By the structure, it is possible to obtain a distance relationship with the portable terminal apparatus also in a situation in which the user has only the radio communicating unit and the portable terminal apparatus is left in a predetermined place.

Furthermore, the invention provides a radio communicating unit for carrying out a radio authentication together with an external portable terminal apparatus, the radio communicating unit comprising a radio authenticating portion for detecting a distance from the portable terminal apparatus and carrying out an authentication depending on whether the distance from the portable terminal apparatus is equal to or smaller than an authentication enable distance, and a notice determination portion for activating a predetermined alarm function to a user if the distance detected by the radio authenticating portion is equal to or greater than an alarm distance at which a predetermined alarm is to be given to the user and is smaller than a use restriction distance which is greater than the alarm distance and at which a predetermined function is to be stopped, and the distance is equal to or greater than the use restriction distance.

By the structure, the function of the portable terminal apparatus is not uniformly controlled when a predetermined distance is made apart from the portable terminal apparatus, but a predetermined alarm is given to the user when a distance shorter than the predetermined distance is made apart from the portable terminal apparatus, that is, before a restriction starts. Accordingly, the user can take a proper action before a use restriction is put on the terminal depending on the environment situation or a use situation of a terminal. Consequently, it is possible to improve a usability while maintaining a security of the terminal.

The invention provides a use restricting method of a portable terminal apparatus for carrying out a radio authentication together with an external radio communicating unit, the portable terminal apparatus executing a step of detecting a distance from the radio communicating unit, a step of carrying out an authentication depending on whether the distance from the radio communicating unit is equal to or smaller than an authentication enable distance, a step of activating a predetermined alarm function to a user if the distance detected by the radio authenticating portion is equal to or greater than an alarm distance at which a predetermined alarm is to be given to the user, and is smaller than a use restriction distance which is greater than the alarm distance and at which a predetermined function is to be stopped, and a step of restricting a preselected function if the distance detected by the radio authenticating portion is equal to or greater than the use restriction distance.

By the method, the function is not uniformly controlled when a predetermined distance is made apart from the radio communicating unit, but a predetermined alarm is given to the user when a distance shorter than the predetermined distance is made apart from the radio communicating unit, that is, before a restriction starts. Accordingly, the user can take a proper action before a use restriction is put on the terminal depending on the environment situation or a use situation of a terminal. Consequently, it is possible to improve a usability while maintaining a security of the terminal.

Furthermore, the invention provides a use restricting method of a radio communicating unit for carrying out a radio authentication together with an external portable terminal apparatus, the radio communicating unit executing a step of detecting a distance from the portable terminal device, a step of carrying out an authentication depending on whether the distance from the portable terminal apparatus is equal to or smaller than an authentication enable distance, and a step of activating a predetermined alarm function to a user if the distance detected by the radio authenticating portion is equal to or greater than an alarm distance at which a predetermined alarm is to be given to the user, and is smaller than a use restriction distance which is greater than the alarm distance and at which a predetermined function is to be stopped, and the distance is equal to or greater than the use restriction distance.

By the method, the function of the portable terminal apparatus is not uniformly controlled when a predetermined distance is made apart from the portable terminal apparatus, but a predetermined alarm is given to the user when a distance shorter than the predetermined distance is made apart from the portable terminal apparatus, that is, before a restriction starts. Accordingly, the user can take a proper action before a use restriction is put on the terminal depending on the environment situation or a use situation of a terminal. Consequently, it is possible to improve a usability while maintaining a security of the terminal.

### ADVANTAGE OF THE INVENTION

According to the invention, it is possible to provide a portable terminal apparatus capable of improving a usability while maintaining a security, and a use restricting method thereof.

### BRIEF DESCRIPTION OF THE DRAWINGS

Fig. 1 is an explanatory view showing a use restricting method of a portable terminal apparatus according to an embodiment of the invention.
Fig. 2 is a table collectively showing a use restricting manner of the portable terminal apparatus according to the embodiment of the invention.
Fig. 3 is a block diagram showing main structures of a portable terminal apparatus and a radio communicating unit according to a first embodiment of the invention.
Fig. 4 is a flowchart showing an operating procedure for the portable terminal apparatus according to the first embodiment of the invention.
Fig. 5 is a block diagram showing main structures of a portable terminal apparatus and a radio communicating unit according to a second embodiment of the invention.
Fig. 6 is a flowchart showing an operating procedure for the radio communicating unit according to the second embodiment of the invention.
Fig. 7 is a block diagram showing main structures of a portable terminal apparatus and a radio communicating unit according to a third embodiment of the invention.
Fig. 8 is a flowchart showing an operating procedure for the portable terminal apparatus according to the third embodiment of the invention.

### EXPLANATION OF THE DESIGNATIONS

- 1: portable terminal apparatus
- 2: base station
- 3: radio communicating unit
- 11: mobile radio portion
- 12: radio authenticating portion
- 13: use restriction determination portion
- 14: setting storing portion
- 15: notice determination portion
- 16: notifying method setting portion
- 17: device driver
- 18: device group
- 19: terminal state managing portion
- 20: application group
- 21: operating portion
- 31: radio authenticating portion
- 32: notice determination portion
- 33: notifying method setting portion
- 34: device driver
- 35: device group
- 36: data analyzing portion
- 121: storing portion
- 122: radio portion
- 123: determination portion
- 311: storing portion
- 312: radio portion
- 313: determination portion

### BEST MODE FOR CARRYING OUT THE INVENTION

(First Embodiment)

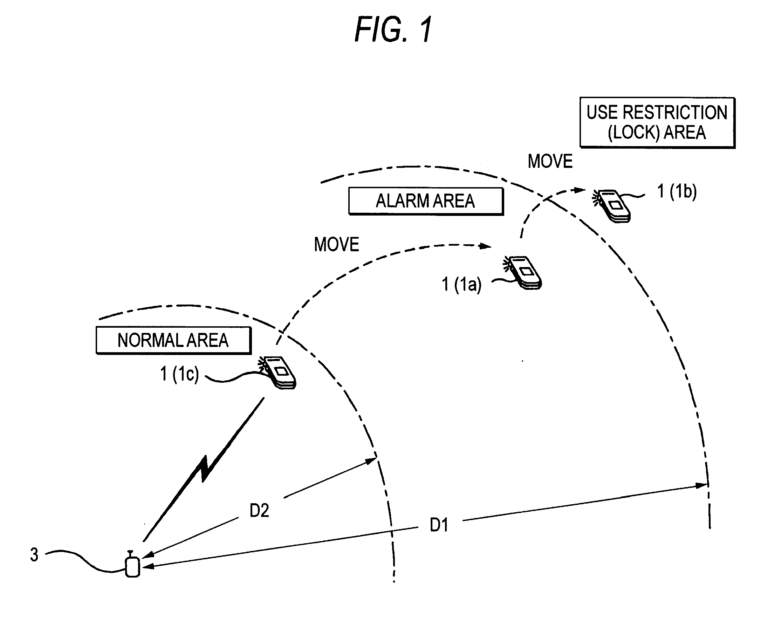

Fig. 1 is an explanatory view showing a use restricting method of a portable terminal apparatus, particularly, a portable telephone according to a first embodiment of the invention. As shown in Fig. 1, a portable terminal apparatus 1 carries out a radio authentication together with a radio communicating unit 3. If it is detected that a distance from the radio communicating unit 3 is smaller than an authentication distance (a use restriction distance) D1 (a state shown in a portable terminal apparatus 1a of Fig. 1), an authentication is valid. On the other hand, if the distance is greater than the authentication distance D1 (a state shown in a portable terminal apparatus 1b of Fig. 1), the authentication is invalid. For a radio authenticating method, an equivalent method to the conventional method described in the Patent Document 1 can be used, and the method and the apparatus are not restricted.

In a state in which the authentication is valid, the portable terminal apparatus 1 and the radio communicating unit 3 are provided at a short distance. Accordingly, it is not necessary to put a use restriction. On the other hand, in the case in which the portable terminal apparatus 1 is located apart from the radio communicating unit 3 so that the authentication is invalid, the portable terminal apparatus 1 needs to put the use restriction. However, if the authentication is invalid and the use restriction is simultaneously put without a previous notice on every kind of scenes, a user often feels inconvenience. For example, in the case in which the distance from the radio communicating unit 3 is greater than the authentication distance D1 by accident during a call of the user (a movement from 1a to 1b in Fig. 1), the call is also cut off so that a usability is very poor. During the use of an application such as a game, moreover, when the application is suddenly cut off in the same situation, the usability is very poor. In addition, in this case, the user himself (herself) has the portable terminal apparatus and it is not greatly necessary to put the use restriction in respect of a security.

In the portable terminal apparatus 1 according to the embodiment, when the distance from the radio communicating unit 3 is equal to an alarm distance D2 which is smaller than the authentication distance D1 before it is greater than the authentication distance D1, that is, the use restriction is put after the authentication becomes invalid, an alarm is previously given to the user. More specifically, a notice indicating that the unit and the terminal are being separated from each other is given to the user.

For example, as shown in Fig. 1, when a change is carried out from a state in which the distance between the portable terminal apparatus 1 and the radio communicating unit 3 is smaller than the alarm distance D2 (a state shown in the portable terminal apparatus 1c of Fig. 1) to a state in which the distance is equal to or greater than the alarm distance D2 with the movement of the radio communicating unit 3 (a state shown in the portable terminal apparatus 1a of Fig. 1), the portable terminal apparatus 1 gives the user an alarm indicating that the distance from the radio communicating unit 3 is being increased. Herein, the alarm distance D2 < the authentication distance D1 is set. An alarm method which will be described below is used depending on a use situation of the portable terminal apparatus. As a matter of course, the following method is illustrative and other optional methods can be employed for the alarm method.

The case of an application (a game) operation: an alarm display on a liquid crystal screen (an alarm display in icons, graphics or characters)
The case of a call: make an alarm sound 1 (directly oscillate a voice to ears of a user through a receiver)
The other cases: flashing of an ELD at a predetermined number of times (three times) (always carry out flashing irrespective of a use situation)

As shown in Fig. 1, when a change is carried out from a state in which a distance between the portable terminal apparatus 1 and the radio communicating unit 3 is smaller than the authentication distance D1 (a state shown in the portable terminal apparatus 1a in Fig. 1) to a state in which the distance is equal to or greater than the authentication distance D1 (a state shown in the portable terminal apparatus 1b in Fig. 1) with the movement of the portable terminal apparatus 1 or the radio communicating unit 3, the function of the portable terminal apparatus 1 is restricted. A notice of a transition to a function restricting state is given as follows depending on a situation. As a matter of course, the following methods are illustrative and other optional methods can be employed for a notifying method.

The case of an application operation: a use restriction with an end of the application
The case of a call: make an alarm sound 2, a use restriction after an end of the call
The other cases: flashing of an LED at a predetermined number of times (once for a red color) and a use restriction

In the portable terminal apparatus 1 according to the invention, moreover, it is possible to provide a plurality of stages for the use restriction in the state shown in the portable terminal apparatus 1b of Fig. 1. More specifically, it is possible to prepare a plurality of security levels required by the user, and the user can select a favorite one of the levels. For example, in the case in which a usability is to be improved even if the security is sacrificed to some degree, the security is set on a low level. To the contrary, in the case in which a high security is to be maintained even if the usability is sacrificed, the security is set on a high level.

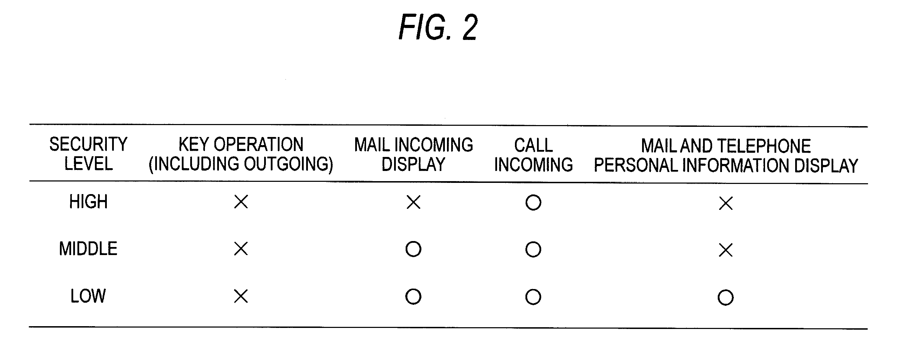

Fig. 2 is a table collectively showing the presence of a use restriction of a function corresponding to a setting security level. The user can select and set any of three stages including high, middle and low levels of the security by a scroll operation in the liquid crystal screen display of a terminal. A function in which the use is not restricted (a use enable function) is represented by ○ and a function in which the use is restricted (a use disable function) is represented by X.

As is apparent from the table, a key operation of a terminal, particularly, an action operation from a terminal to an outside such as telephone outgoing is basically restricted on any of the three levels (the key operation is invalid). In the case in which the portable terminal apparatus includes an IC card having a settlement function, moreover, it is a matter of course that the settlement function is restricted. Furthermore, the display of mail incoming is restricted by only setting the high level.

On the other hand, telephone incoming can be carries out on all of the levels. The reason is that it can be considered that there is a very small problem in respect of the security even if only the telephone incoming is permitted. Also in the case in which telephone incoming or mail receipt is generated in the setting on the high level and the middle level, a collation with a telephone book (an address book) is carried out based on a telephone number of an originator or a mail address of the originator and an execution of a display of personal information (a screen display of a personal name or group information) and a change in a type of an incoming melody or an incoming image are restricted. It can be considered that the information has a great request for a protection.

As described above, a function related to information having a high security importance is restricted to be used even if the security level is in a relatively low mode. On the other hand, a function related to information having a low security importance is ensured to be used even if the security level is in a relatively high mode.

In the embodiment, when the change is carried out from the state in which the distance between the portable terminal apparatus 1 and the radio communicating unit 3 is smaller than the authentication distance D1 to the state in which the distance is equal to or greater than the authentication distance D1 (a movement from 1a to 1b in Fig. 1), a calling function is not restricted. The use restriction is not put until the end of the call. During the call, the user is rarely conscious that the distance from the radio communicating unit 3 exceeds the authentication distance D1. The situation is possible. However, the sudden cutoff of the call is felt to be very inconvenient. In the embodiment, therefore, the use restriction is put after the end of a call given before the distance from the radio communicating unit 3 exceeds the authentication distance D1. Moreover, the continuation of the call of the user himself (herself) is only permitted consecutively. Therefore, it can be considered that there is a low possibility that the security might be damaged even if the processing is carried out. In this case, in the same manner as in the case in which a transition from the state of 1c to the state of 1a is carried out, an alarm sound indicating that a use restriction area is entered (that the distance between the portable terminal apparatus 1 and the radio communicating unit 3 exceeds the authentication distance D1) may be given through a receiver or a speaker. Moreover, it is also possible to employ such a structure that the use restriction is put to cut off a call without waiting for the end of the call given before the distance from the radio communicating unit 3 exceeds the authentication distance D1.

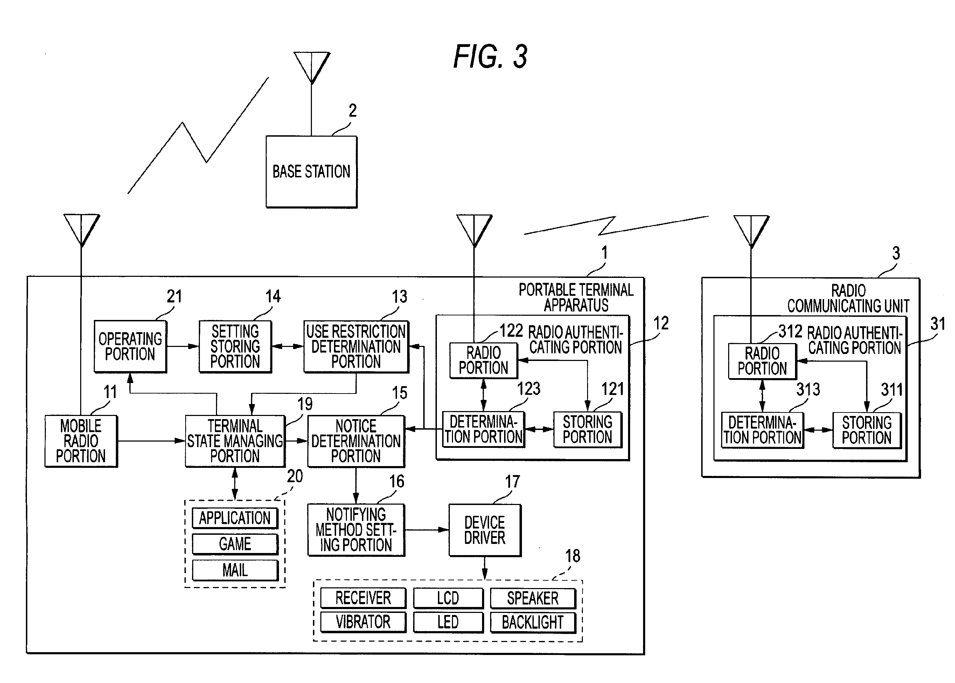

Fig. 3 is a block diagram showing a main structure of the portable terminal apparatus according to the first embodiment of the invention. In the embodiment, description will be given by taking, as an example, the portable terminal apparatus 1 which carries out a radio authentication together with the radio communicating unit 3 and has a mobile communicating function capable of carrying out a communication with a base station 2. However, the mobile communicating function is not always required but various portable terminal apparatuses can be applied.

As shown in Fig. 3, the portable terminal apparatus 1 comprises a mobile radio portion 11, a radio authenticating portion 12, a use restriction determination portion 13, a setting storing portion 14, a notice determination portion 15, a notifying method setting portion 16, a device driver 17, a device group 18, a terminal state managing portion 19, an application group 20, and an operating portion 21.

The mobile radio portion 11 carries out a radio communication with the base station 2. The radio authenticating portion 12 detects a distance from the radio communicating unit 3 and carries out an authentication depending on whether the distance from the radio communicating unit 3 is equal to or smaller than an authentication distance.

The radio authenticating portion 12 has a storing portion 121, a radio portion 122 and a determination portion 123. The storing portion 121 stores an authenticating ID such as an identification code to be used for carrying out a radio authentication together with the radio communicating unit 3. The authenticating ID is previously related between the portable terminal apparatus 1 and the radio communicating unit 3, for example, and can always carry out an authentication by obtaining that they make a pair each other through a radio communication.

The radio portion 122 serves to carry out a radio communication together with the radio communicating unit 3, and transmits the authenticating ID stored in the storing portion 121 to the radio communicating unit 3 and receives a radio signal from the radio communicating unit 3.

The determination portion 123 demodulates a signal received from the radio communicating unit 3 to the radio portion 122 and analyzes an ID, and furthermore, detects a distance from the radio communicating unit 3 based on a signal level of the received signal or an error rate. If the ID received is coincident with the authenticating ID by referring to the storing portion 121 and the distance from the radio communicating unit 3 is equal to or smaller than a predetermined distance (an authentication distance), it is determined that an authentication is valid. In the other cases, it is determined that the authentication is invalid. As a result of the authentication, an authentication flag (for example, 0 in a valid authentication and 1 in an invalid authentication) is output to the use restriction determination portion 13 or the notice determination portion 15.

The use restriction determination portion 13 is operated as an example of a use restricting portion and restricts the use of a predetermined function possessed by the portable terminal apparatus 1 based on a result of the authentication carried out by the radio authenticating portion. More specifically, upon receipt of a signal indicating that the distance from the radio communicating unit 3 is equal to or greater than the authentication distance D1 from the determination portion 123 of the radio authenticating portion 12, the use restriction determination portion 13 gives the terminal state managing portion 19 an instruction for restricting the function of the portable terminal apparatus (locks the terminal) based on the predetermined setting level shown in Fig. 2. The level setting is stored in the setting storing portion 14. Upon receipt of the processing, moreover, the terminal state managing portion 19 sets the operation of the operating portion 21 to be ineffective.

On the other hand, upon receipt of a signal indicating that the distance from the radio communicating unit 3 is equal to or greater than the alarm distance D2 and is smaller than the authentication distance D1 from the determination portion 123 of the radio authenticating portion 12, the notice determination portion 15 causes a specific device to give an alarm or a notice to the user through the device driver 17 based on a notifying method which is preset in the notifying method setting portion 16.

The device driver 17 serves to drive each device included in the device group 18, and various drivers used generally can be utilized. Examples of the device include a speaker, a back light, an LCD (Liquid Crystal Display), an LED (Light Emitting Diode), a key, a receiver and a vibrator in the device group 18. A device for giving an alarm to the user is not restricted thereto.

The LED gives the user, through a light, that the distance from the radio communicating unit 3 exceeds the alarm distance D2 irrespective of a use situation of the terminal. During the call, moreover, the receiver is mainly used to directly send an alarm sound to the ears of the user. Moreover, characters, graphics or icons are displayed on the LCD to visually appeal to the user while a game or another application is being operated. In this case, a voice through the speaker may be used together. As a matter of course, the individual alarm methods are only illustrative.

The terminal state managing portion 19 determines a state of transmission/receipt of a radio wave and a state of an authentication propriety through the mobile radio portion 11 and the use restriction determination portion 13, and manages the whole terminal. Moreover, the terminal state managing portion 19 obtains an operating situation of any of the applications in the application group 20 and gives a notice to the notice determination portion 15. Types of the applications include games, general applications other than the games, and mails.

The operating portion 21 is constituted by a key, a button and a dial which are disposed in a housing, and the user carries out various inputting operations. As described above, when the distance between the terminal and the radio communicating unit is equal to or greater than the authentication distance D1, a restriction is put on the use so that an input operation to the operating portion 21 becomes entirely or partially invalid.

The radio communicating unit 3 is provided with a radio authenticating portion 31 for carrying out a radio authentication for the portable terminal apparatus 1. The radio authenticating portion 31 has a storing portion 311, a radio portion 312 and a determination portion 313 which carry out the same operations as those of the storing portion 121, the radio portion 122 and the determination portion 123 which are provided in the radio authenticating portion 12 of the portable terminal apparatus 1, respectively.

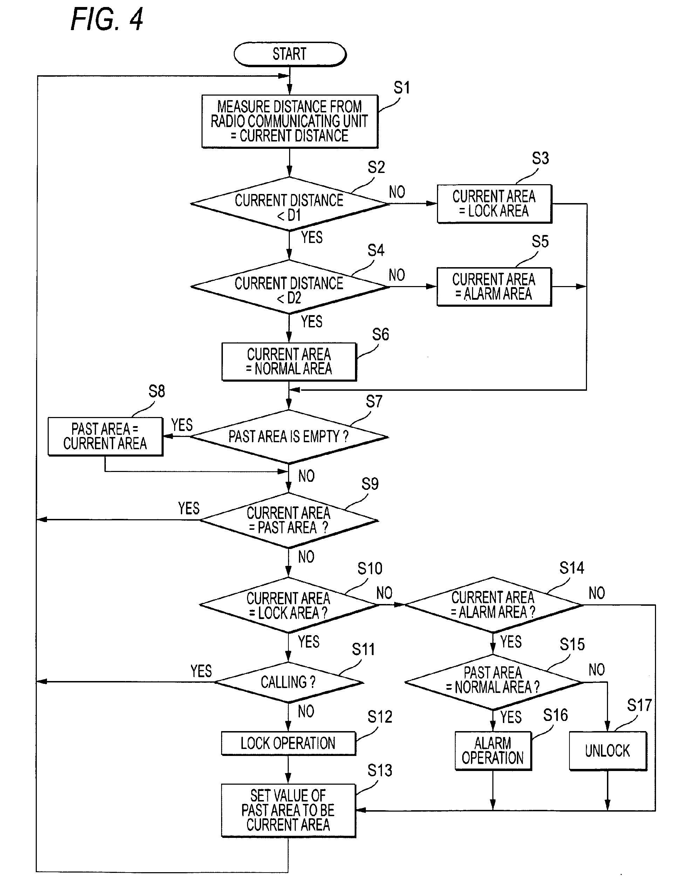

Fig. 4 is a flowchart showing an operating procedure for the portable terminal apparatus 1 according to the first embodiment of the invention. In the following description, referring to the distance D from the radio communicating unit 3 to the portable terminal apparatus 1 as shown in Fig. 1, a region of 0 < D < D2 will be referred to as a "normal area", a region of D2 ≤ D < D1 will be referred to as an "alarm area", and a region of D ≤ D1 will be referred to as a "use restriction (lock) area". First of all, the radio authenticating portion 12 measures the distance from the radio communicating unit 3 (which will be referred to as a "current distance") through a received radio wave in accordance with a normal method. Although the "current distance" is calculated from an amount of attenuation of the radio wave from the unit and does not always reflect a physically accurate current distance, it is treated as a current distance for convenience.

Next, the measured current distance is compared with the authentication distance D1 (Step S2). If the current distance is equal to or greater than the authentication distance D1 (Step S2; NO), it is determined that the portable terminal apparatus 1 is present in the use restriction area (lock area) (which will be referred to as "the current area of the portable terminal apparatus 1 is the use restriction area") (Step S3) and the processing proceeds to Step S7. On the other hand, if the current distance is smaller than the authentication distance D1 at Step S2 (Step S2; YES), the measured current distance is further compared with the alarm distance D2 (Step S4). If the current distance is equal to or greater than the alarm distance D2 (Step S4; NO), the notice determination portion 15 determines that the current area of the portable terminal apparatus 1 is in the alarm area (Step S5) and the processing proceeds to the Step S7. On the other hand, if the current distance is smaller than the alarm distance D2 at the Step S4 (Step S4; YES), the current area of the portable terminal apparatus 1 is determined to be the normal area (Step S6).

After the Steps S3, S5 and S6, the portable terminal apparatus 1 refers to a close record (a past area) stored in a memory (not shown) recording a past deciding history indicative of an area present in the past (before the determination in the Step S1). If the record of the past area is not present (Step S7; YES), it is assumed that the past area is equal to the current area (Step S8). On the other hand, if it is determined that the record of the past area is present at the Step S7 (Step S7; NO) or after the Step S8, it is determined whether the current area is equal to the past area or not. If the determination is NO in the Step S7, a determination is made based on an actual record of the past area. After the Step S8, a determination is made based on the record of the past area assumed by the current area. As a result of a determination in Step S9, if it is determined that the current area is equal to the past area (Step S9; YES), that is, it is determined that the portable terminal apparatus 1 is not moved to another area from a final distance authentication point, it is not particularly necessary to change a state of the terminal. Therefore, the processing returns to the Step S1 and the steps are repeated.

As a result of the determination in the Step S9, if it is determined that the current area is not equal to the past area (Step S9; NO), it is indicated that the terminal is moved to another area (the current area) from the previous area. Therefore, it is determined whether the current area is the use restriction area or not (Step S10). If it is determined that the portable terminal apparatus 1 is present in the use restriction area (Step S10; YES), it is determined whether the portable terminal apparatus 1 is calling or not (Step S11) . As a result, if it is determined that the portable terminal apparatus 1 is calling (Step S11; YES), the processing returns to the Step S1 again and the steps are repeated. More specifically, in the embodiment described above, the use restriction is put by waiting for the end of the call which has been carried out before the distance from the radio communicating unit 3 exceeds the authentication distance D1. For this reason, the use restriction is not put on the terminal at once and the steps from the Step S1 are carried out again.

If it is determined that the calling is not carried out or has already been ended at the Step S11 (Step S11; NO), the use restriction determination portion 13 starts the use restriction of a portable terminal (Step S12) and a value of the current area is updated with a value of the past area recorded in the memory (Step S13). In this case, the value of the current area is set to be a value of the use restriction area.

On the other hand, if it is determined that the portable terminal apparatus 1 is not present in the use restriction area at Step S10 (Step S10; NO), it is then determined whether the current area is the alarm area or not (Step S14). If it is determined that the portable terminal apparatus 1 is not present in the alarm area (Step S14; NO), the value of the current area is updated with the value of the past area recorded in the memory (Step S13). In this case, the portable terminal apparatus 1 is present in the normal area and the value of the current area is set to be a value of the normal area.

If it is determined that the portable terminal apparatus 1 is present in the alarm area at the Step S14 (Step S14; YES) and the past area is the normal area (Step S15; YES), an alarm operation is started (Step S16). This case corresponds to a movement from 1c to 1a in Fig. 1. Therefore, each device is driven by the device driver 18 depending on a type of the device and the method which are preset to the notifying method setting portion 16 in accordance with an instruction given from the notice determination portion 15. On the other hand, if the past area is not the normal area (Step S15; NO), the use restriction put on the terminal is cancelled (Step S17). This case corresponds to a movement from 1b to 1a in Fig. 1. Therefore, the value of the current area is updated with the value of the past area recorded in the memory after the Steps S16 and S17 (Step S13). In this case, the portable terminal apparatus 1 is present in the alarm area and the value of the current area is set to be a value of the alarm area.

While the terms of "use restriction" and "lock" are used together in the description, a great difference is not made between both of them. Moreover, the number of stages in the use restriction area which can be provided is not restricted. For example, it is also possible to put the use restriction on the "low" security level in Fig. 2 in the use restriction area of Fig. 1, and furthermore, to put the use restriction on the "middle" security level in Fig. 2 at a distance D3 (D1 < D3) on an outside. More specifically, in the invention, the terminal is designed in such a manner that at least one alarm area is provided on an inside of at least one use restriction area.

(Second Embodiment)
While the example in which the alarm function and the use restricting function are provided in the portable terminal apparatus 1 is given in the first embodiment, it is also possible to provide the alarm function and the use restricting function on a radio communicating unit side with the same structure. More specifically, it is possible to have such a structure that various devices provided in the radio communicating unit give an alarm if a distance from the portable terminal apparatus is equal to or greater than a predetermined distance. The structure is useful for the case in which a user possesses a radio communicating unit and is leaving a predetermined place with a portable terminal apparatus left in the same place.

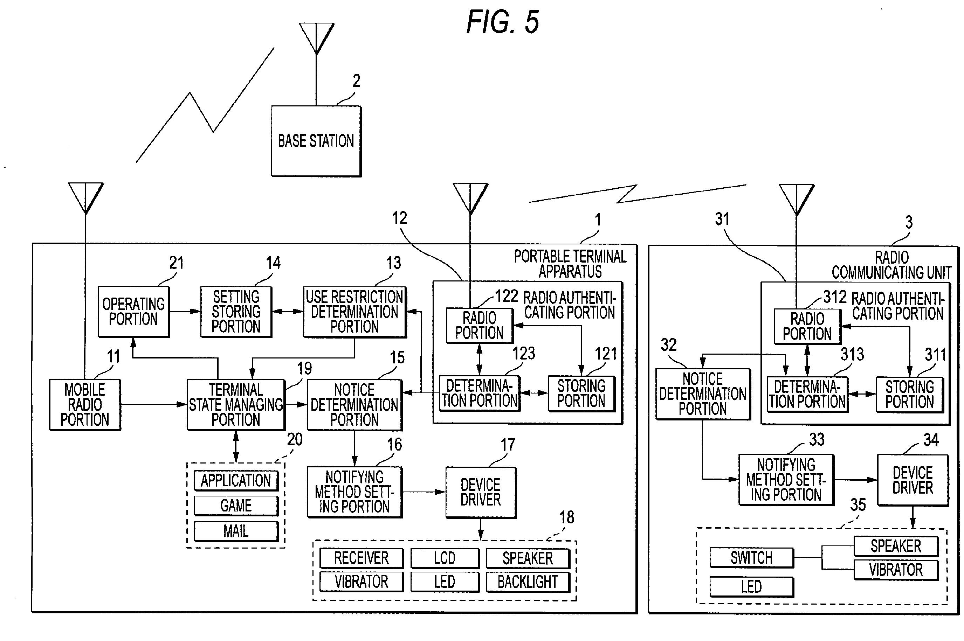

Fig. 5 is a block diagram showing main structures of a portable terminal apparatus and a radio communicating unit according to a second embodiment of the invention. In the embodiment, a radio communicating unit 3 is provided with a notice determination portion 32, a notifying method setting portion 33, a device driver 34 and a device group 35 differently from the first embodiment.

Upon receipt of a signal indicating that a distance from a portable terminal apparatus 1 is equal to or greater than an alarm distance D2 and is smaller than an authentication distance D1 from a determination portion 313 of a radio authenticating portion 31, the notice determination portion 32 causes a specific device to give an alarm and a notice to the user through the device driver 34 based on a notifying method which is preset in the notifying method setting portion 33. The device driver 34 serves to drive each device included in the device group 35, and various drivers used generally can be utilized. Examples of the device include a speaker, a vibrator and an LED in the device group 35. A device for giving an alarm to the user is not restricted thereto. The LED gives the user, through a light, that the distance from the portable terminal apparatus 1 exceeds the alarm distance D2 irrespective of a use situation of the radio communicating unit 3. The speaker group 35 includes the speaker, the vibrator and the LED and has such a structure that the actuation of the speaker and the vibrator can be switched by a switch operation of the user.

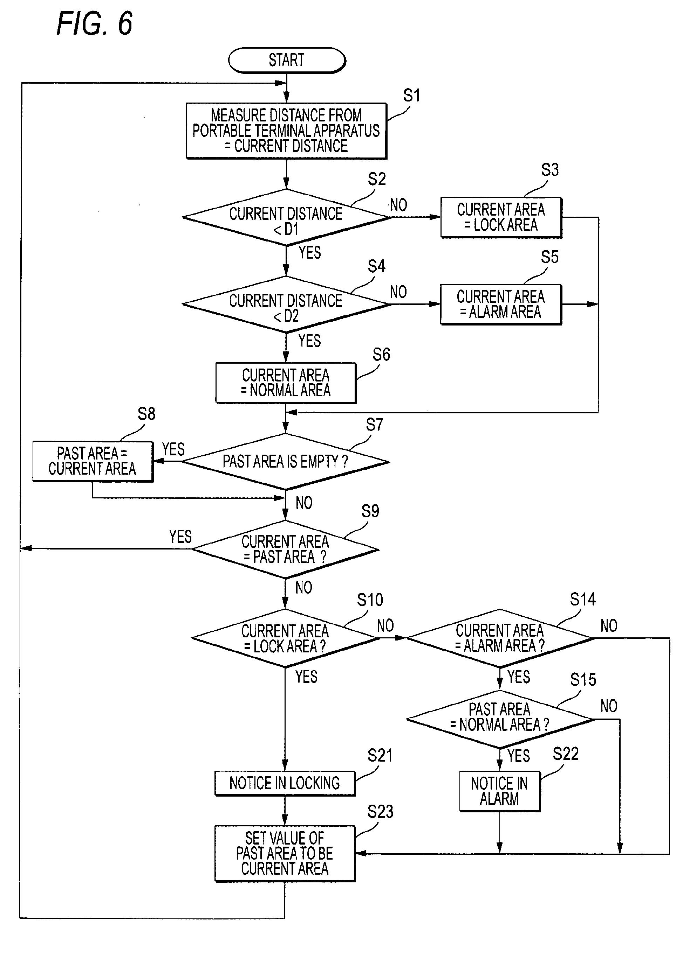

Fig. 6 is a flowchart showing an operating procedure for the radio communicating unit according to the second embodiment of the invention. In a situation in which the procedure is applied, the portable terminal apparatus 1 is left in the position of the radio communicating unit 3 in Fig. 1, the radio communicating unit 3 (possessed by the user) is moved to a normal area, an alarm area and a use restriction area in place of the portable apparatuses 1 (11a, 1b, 1c).

First of all, the radio authenticating portion 12 measures the distance from the portable terminal apparatus 1 (which will be referred to as a "current distance") through a received radio wave in accordance with a normal method. Although the "current distance" is calculated from an amount of attenuation of the radio wave sent from the terminal apparatus and does not always reflect a physically accurate current distance, it is treated as a current distance for convenience.

Next, the measured current distance is compared with the authentication distance D1 (Step S2). If the current distance is equal to or greater than the authentication distance D1 (Step S2; NO), it is determined that the radio communicating unit 3 is present in the use restriction area (lock area) (which will be referred to as "the current area of the radio communicating unit 3 is the use restriction area") (Step S3) and the processing proceeds to Step S7. On the other hand, if the current distance is smaller than the authentication distance D1 at the Step S2 (Step S2; YES), the measured current distance is further compared with the alarm distance D2 (Step S4). If the current distance is equal to or greater than the alarm distance D2 (Step S4; NO), the notice determination portion 32 determines that the current area of the radio communicating unit 3 is determined to be the alarm area (Step S5) and the processing proceeds to the Step S7. On the other hand, if the current distance is smaller than the alarm distance D2 at the Step S4 (Step S4 ; YES), the current area of the radio communicating unit 3 is determined to be the normal area (Step S6).

After the Steps S3, S5 and S6, the radio communicating unit 3 refers to a close record (a past area) stored in a memory (not shown) recording a past deciding history indicative of an area present in the past (before the determination in the Step S1). If the record of the past area is not present (Step S7; YES), it is assumed that the past area is equal to the current area (Step S8). On the other hand, if it is determined that the record of the past area is present at the Step S7 (Step S7; NO) or after the Step S8, it is determined whether the current area is equal to the past area or not. If the determination is NO in the Step S7, a determination is made based on an actual record of the past area. After the Step S8, a determination is made based on the record of the past area assumed by the current area. As a result of a determination in Step S9, if it is determined that the current area is equal to the past area (Step S9; YES), that is, it is determined that the radio communicating unit 3 is not moved to another area from a final distance authentication point, it is not particularly necessary to change a state of the terminal. Therefore, the processing returns to the Step S1 and the steps are repeated.

As a result of the determination in the Step S9, if it is determined that the current area is not equal to the past area (Step S9; NO), it is indicated that the radio communicating unit is moved to another area (the current area) from the previous area. Therefore, it is determined whether the current area is the use restriction area or not (Step S10) . If it is determined that the radio communicating unit 3 is present in the use restriction area (Step S10; YES), the notice determination portion 32 transmits a notice indicative of that the use restriction is put on the portable terminal apparatus 1 to the portable terminal apparatus 1 through the determination portion 313 and the radio portion 312, and the use restriction determination portion 13 receiving the notice through the radio authenticating portion 12 starts the use restriction of the portable terminal (Step S21) and updates a value of the current area with a value of the past area recorded in the memory (Step S13). In this case, the value of the current area is set to be a value of the use restriction area.

On the other hand, if it is determined that the radio communicating unit 3 is not present in the use restriction area at Step S10 (Step S10; NO), it is then determined whether the current area is an alarm area or not (Step S14). If it is determined that the radio communicating unit 3 is not present in the alarm area (Step S14; NO), the value of the current area is updated with the value of the past area recorded in the memory (Step S13). In this case, the radio communicating unit 3 is present in the normal area and the value of the current area is set to be a value of the normal area.

If it is determined that the portable terminal apparatus 1 is present in the alarm area at the Step S14 (Step S14; YES) and the past area is the normal area (Step S15; YES), an alarm operation is started (Step S16). This case corresponds to a movement from 1c to 1a in Fig. 1. Therefore, each device is driven by the device driver 34 depending on a type of the device and the method which are preset to the notifying method setting portion 33 in accordance with an instruction given from the notice determination portion 32. On the other hand, the case in which the past area is not the normal area (Step S15; NO) corresponds to a movement from 1b to 1a in Fig. 1. Therefore, the value of the current area is updated with the value of the past area recorded in the memory (Step S13). In this case, the radio communicating unit 3 is present in the alarm area and the value of the current area is set to be a value of the alarm area.

(Third Embodiment)
In the second embodiment, the event is determined on the radio communicating unit 3 side apart from the portable terminal apparatus 1 by a predetermined distance or more, and a notice is given to the user and the use restriction of the portable terminal apparatus 1 is carried out. In the embodiment, in the same situation, when the portable terminal apparatus 1 is separated from the radio communicating unit 3 by a predetermined distance or more, the event is determined and a command for giving a notice to the user is sent to the radio communicating unit 3. In the same manner as in the second embodiment, the structure is useful for the case in which a user possesses a radio communicating unit and is leaving a predetermined place with a portable terminal apparatus left in the same place.

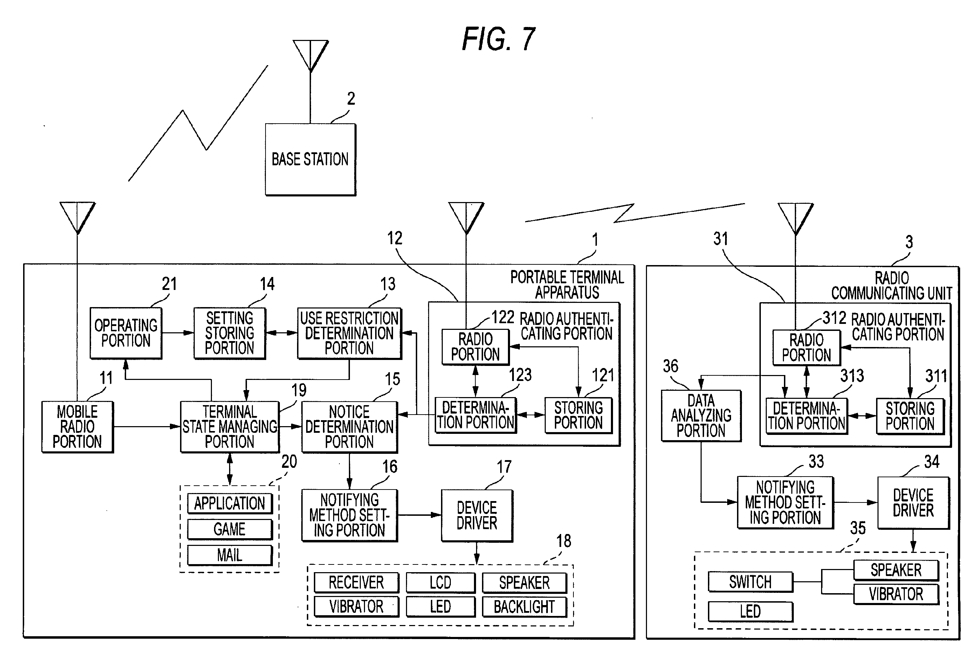

Fig. 7 is a block diagram showing main structures of a portable terminal apparatus and a radio communicating unit according to a third embodiment. In the embodiment, a data analyzing portion 36 is provided in place of the notice determination portion 32 in the radio communicating unit 3 differently from the second embodiment.

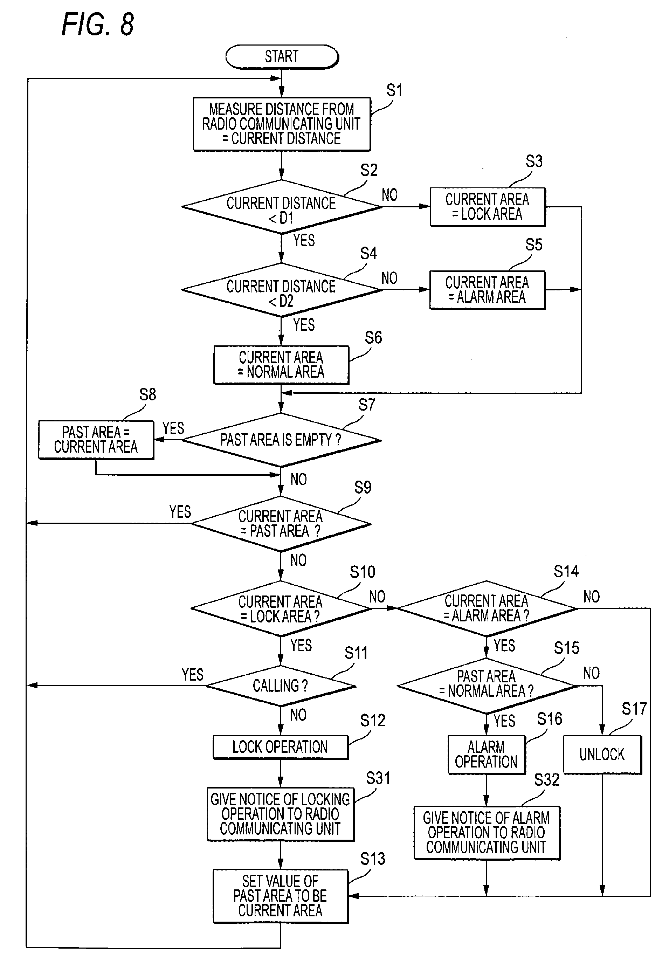

Fig. 8 is a flowchart showing an operating procedure for the radio communicating unit according to the third embodiment of the invention. In a situation in which the procedure is applied, the portable terminal apparatus 1 is left in the position of the radio communicating unit 3 in Fig. 1, the radio communicating unit 3 (possessed by the user) is moved to a normal area, an alarm area and a use restriction area in place of the portable terminal apparatuses (11a, 1b, 1c) in the same manner as in the second embodiment. However, the portable terminal apparatus 1 determines a distance from the radio communicating unit 3 and the same procedure as those in the Step S1 to the Step S12 and from the Step S14 to the Step S17 in the procedure according to the first embodiment of Fig. 4 is executed.

In the embodiment, upon receipt of the activation of the use restriction of a portable terminal apparatus through a use restriction determination portion 13 after the Step S12, a notice determination portion 15 also transmits notice data indicating the purport of the use restriction to the radio communicating unit 3 through a radio authenticating portion 12 (Step S31). On the radio communicating unit 3 side, a data analyzing portion 36 analyzes the notice data. When the data analyzing portion 36 analyzes that the notice data are a notice indicating the purport of the use restriction, a notifying method setting portion 33 and a device driver 34 activate a predetermined device and give a user possessing the radio communicating unit 3 a notice indicating that the use restriction is put as described above.

In the embodiment, furthermore, a notice determination portion 15 also transmits, to the radio communicating unit 3 through the radio authenticating portion 12, notice data indicating the purpose that an alarm operation is carried out on a portable terminal operation side after Step S16 (Step S32). On the radio communicating unit 3 side, the data analyzing portion 36 analyzes the notice data. When the data analyzing portion 36 analyzes that the notice data are a notice indicating the purport of the start of the alarm operation, the notifying method setting portion 33 and the device driver 34 activate a predetermined device and give a notice of an alarm to the user possessing the radio communicating unit 3 as described above.

In both of the second and third embodiments, a flashing color of the LED in the radio communicating unit 3, a sound generated from the speaker and a music can be set on the portable terminal apparatus 1 side, and can be transmitted and set to the radio communicating unit 3 through a radio communication.

According to the invention, an alarm is given to the user before the distance between the portable terminal apparatus and the radio communicating unit is increased and the use is restricted. Accordingly, the user can take a proper action before a use restriction is put on the terminal depending on the environment situation or a use situation of a terminal. Consequently, it is possible to ensure a usability while maintaining a security.

According to the invention, moreover, it is also possible to restrict the use of a function in a use restricting state corresponding to a security level to meet the demand of the user. The user can regulate a balance of a security and a usability. A power supply may be turned off to disable call incoming, which has not been described in the embodiments.

While the various embodiments according to the invention have been described above, the invention is not restricted to the matters described in the embodiments but the invention is also intended for the skilled in the art to carry out a change and an application based on the description of the specification and the well-known techniques and they are included in a range to be protected.

The application is based on Japanese Patent Application (Japanese Patent Application No. 2005-375823) filed on December 27, 2005, the contents of which are incorporated by reference.

### INDUSTRIAL APPLICABILITY

The portable terminal apparatus and the use restricting method according to the invention have an advantage that it is possible to improve a usability while maintaining a security, and are useful for a portable telephone and a PDA (Personal Digital Assistant).

## Claims

1. A portable terminal apparatus for carrying out a radio authentication together with an external radio communicating unit, comprising:
a radio authenticating portion for detecting a distance from the radio communicating unit and carrying out an authentication depending on whether the distance from the radio communicating unit is equal to or smaller than an authentication enable distance;
a notice determination portion for activating a predetermined alarm function to a user if the distance detected by the radio authenticating portion is equal to or greater than an alarm distance at which a predetermined alarm is to be given to the user and is smaller than a use restriction distance which is greater than the alarm distance and at which a predetermined function is to be stopped; and
a use restricting portion for restricting a preselected function if the distance detected by the radio authenticating portion is equal to or greater than the use restriction distance.

2. The portable terminal apparatus according to claim 1, further comprising at least one of an LED, an LCD, a speaker and a receiver as an apparatus having the alarm function.

3. The portable terminal apparatus according to claim 1, further comprising:
an operating portion for accepting an operation input for selecting a function to be a use restricting target; and
a setting storing portion for storing a relationship between the operation input and the function to be the use restricting target,
the use restricting portion stopping the function to be the use restricting target by referring to the setting storing portion corresponding to the operation input.

4. The portable terminal apparatus according to claim 1, wherein the portable terminal apparatus is a portable telephone, and
the use restricting portion stops the selected function after an end of a call carried out by the portable telephone if the distance detected by the radio authenticating portion during the call is equal to or greater than the use restriction distance.

5. The portable terminal apparatus according to claim 1, wherein the notice determination portion transmits, to the radio communicating unit, notice data including at least one of a notice indicating that the predetermined alarm function to a user is activated and a notice indicating that the selected function of the portable terminal apparatus is restricted by the use restricting portion.

6. A radio communicating unit for carrying out a radio authentication together with an external portable terminal apparatus, comprising:
a radio authenticating portion for detecting a distance from the portable terminal apparatus and carrying out an authentication depending on whether the distance from the portable terminal apparatus is equal to or smaller than an authentication enable distance; and
a notice determination portion for activating a predetermined alarm function to a user if the distance detected by the radio authenticating portion is equal to or greater than an alarm distance at which a predetermined alarm is to be given to the user and is smaller than a use restriction distance which is greater than the alarm distance and at which a predetermined function is to be stopped, and the distance is equal to or greater than the use restriction distance.

7. A use restricting method of a portable terminal apparatus for carrying out a radio authentication together with an external radio communicating unit, the portable terminal apparatus executing:
a step of detecting a distance from the radio communicating unit;
a step of carrying out an authentication depending on whether the distance from the radio communicating unit is equal to or smaller than an authentication enable distance;
a step of activating a predetermined alarm function to a user if the distance detected by the radio authenticating portion is equal to or greater than an alarm distance at which a predetermined alarm is to be given to the user, and is smaller than a use restriction distance which is greater than the alarm distance and at which a predetermined function is to be stopped; and
a step of restricting a preselected function if the distance detected by the radio authenticating portion is equal to or greater than the use restriction distance.

8. A use restricting method of a radio communicating unit for carrying out a radio authentication together with an external portable terminal apparatus, the radio communicating unit executing:
a step of detecting a distance from the portable terminal device;
a step of carrying out an authentication depending on whether the distance from the portable terminal apparatus is equal to or smaller than an authentication enable distance; and
a step of activating a predetermined alarm function to a user if the distance detected by the radio authenticating portion is equal to or greater than an alarm distance at which a predetermined alarm is to be given to the user, and is smaller than a use restriction distance which is greater than the alarm distance and at which a predetermined function is to be stopped, and the distance is equal to or greater than the use restriction distance.
